Europäisches Patentamt

European Patent Office

Office européen des brevets

(11) Veröffentlichungsnummer: **0 618 685 A2**

## (12) EUROPÄISCHE PATENTANMELDUNG

(21) Anmeldenummer: **94103794.7**

(22) Anmeldetag: **11.03.94**

(51) Int. Cl.5: **H04B 3/14**

(30) Priorität: **31.03.93 DE 4310554**

(43) Veröffentlichungstag der Anmeldung:
**05.10.94 Patentblatt 94/40**

(84) Benannte Vertragsstaaten:
**AT CH DE LI NL**

(71) Anmelder: **SIEMENS AKTIENGESELLSCHAFT**
**Wittelsbacherplatz 2**
**D-80333 München (DE)**

(72) Erfinder: **Mayer, Helmut**
**Bahnhofstrasse 8**
**D-86916 Kaufering (DE)**

(54) **Einstellbarer Fächerentzerrer und einstellbare Entzerrereinrichtung.**

㊼ Der Fächerentzerrer (FE) enthält die Reihenschaltung eines ersten Summierers (SU1), dessen ersten Eingang (1) ein Eingangssignal (ES) zugeführt wird, eines regelbaren Verstärkers (V1) und eines zweiten Summierers (SU2), dem zusätzlich das Eingangssignal (ES) zugeführt wird und der ein entzerrtes Ausgangssignal (AS) abgibt, sowie eine zweite Reihenschaltung eines zweiten regelbaren Verstärkers (V2) und eines Integrators (IG), deren Ausgang (12) auf einen zweiten Eingang des ersten Summierers (SU1) rückgekoppelt ist. Die regelbaren Verstärker (V1, V2) sind durch die Verwendung von multiplizierenden D/A-Wandlern (DAC-A, DAC-B, DAC-C) digital einstellbar.

Die besonders für Ton- und Fernsprechleitungen geeigneten Entzerrungskennlinien sind in der Amplitude einstellbar und in Richtung der Frequenzachse parallel verschiebbar.

FIG 3

EP 0 618 685 A2

Bei der Übertragung von Signalen über Leitungen kommt es durch deren frequenzabhängige Dämpfung zu einer Verzerrung der übertragenen Signale. Durch Entzerrer werden die frequenzabhängigen Dämpfungsunterschiede ausgeglichen. Ein Entzerrer kann beispielsweise als Verstärker mit einem einstellbaren Gegenkopplungsnetzwerk aufgebaut sein, das durch Drehschalter eingestellt wird. Häufig reichen jedoch die Anforderungen an die Genauigkeit der Entzerrung nicht aus.

Aus Tietze und Schenk, "Halbleiter-Schaltungstechnik", 6. Auflage, 1983, Seite 433 bis 439 sind einstellbare Filter beschrieben, darunter auch ein digital einstellbares Universalfilter. Diese Filterstrukturen können bei der Realisation von Entzerrern verwendet werden.

Eine Möglichkeit, die erwünschten Entzerrungskennlinien zu erreichen, ist nicht angegeben.

Aufgabe der Erfindung ist es, einen Fächerentzerrer anzugeben, bei dem sowohl eine Verschiebung der Scheitelpunkte der Entzerrungskennlinien als auch unterschiedliche Entzerrungskennlinien mit ausreichender Genauigkeit eingestellt werden können. Außerdem ist eine diesen Fächerentzerrer enthaltende einstellbare Entzerrereinrichtung anzugeben.

Diese Aufgabe wird durch den im Anspruch 1 angegebenen Fächerentzerrer gelöst.

Im Anspruch 9 ist eine vollständige Entzerrereinrichtung angegeben.

Vorteilhaft ist bei dem erfindungsgemäßen Fächerentzerrer die weitgehend voneinander unabhängige Einstellbarkeit unterschiedlicher Entzerrungskennlinien und die Verschiebung von deren Grenzfrequenzen.

Durch die Einschaltung eines weiteren Summierers verlaufen die Entzerrungskennlinien asymptotisch in einem Vereinigungspunkt zusammen.

Durch die Verwendung von multiplizierenden D/A-Wandlern können die Parameter digital mit großer Genauigkeit eingestellt werden.

Vorteilhaft ist, daß anstelle des Integrators ein PI-Regler vorgesehen ist. Hierdurch ergibt sich eine hervorragende Stabilität der Schaltung.

Vorteilhaft ist auch die Ausführung des ersten regelbaren Verstärkers mit einem ersten multiplizierenden D/A-Wandler, der einem Verstärkereingang vorgeschaltet ist und mit einem zweiten multiplizierenden D/A-Wandler im Rückkopplungszweig des Verstärkers. Hierdurch kann die Verstärkung/Dämpfung in einem großen Bereich exakt eingestellt werden.

Vorteilhaft ist ferner, daß die Verstärkung im nicht mehr benötigten Frequenzbereich abgesenkt wird. Hierdurch werden höherfrequente Störsignale unterdrückt und eine Schwingneigung gemildert. Zweckmäßigerweise erfolgt dies mit geringem Aufwand durch die Bildung eines Tiefpaßes durch Parallelschalten eines Kondensators zum multiplizierenden D/A-Wandler im Rückkopplungsweg des Verstärkers.

Besonders vorteilhaft ist das gute Signal/Rauschverhältnis des Entzerrers. Die Verstärkung wird auf das notwendige Maß beschränkt. Bei anderen Entzerrertypen erfolgt zunächst eine höhere Verstärkung mit anschließender Absenkung von bestimmten Frequenzbereichen des Signals.

Die Erfindung wird anhand von Figuren näher erläutert.

Es zeigen:

Fig. 1      ein Prinzipschaltbild des erfindungsgemäßen Fächerentzerrers,
Fig. 2      eine vorteilhafte Variante des Fächerentzerrers,
Fig. 3      ein Schaltbild des Fächerentzerrers,
Fig. 4      ein Prinzipschaltbild einer Entzerrereinrichtung,
Fig. 5      eine vorteilhafte Ausführungsform der Entzerrereinrichtung,
Fig. 6, 7    von Steuerparametern abhängige Entzerrerkennlinien.

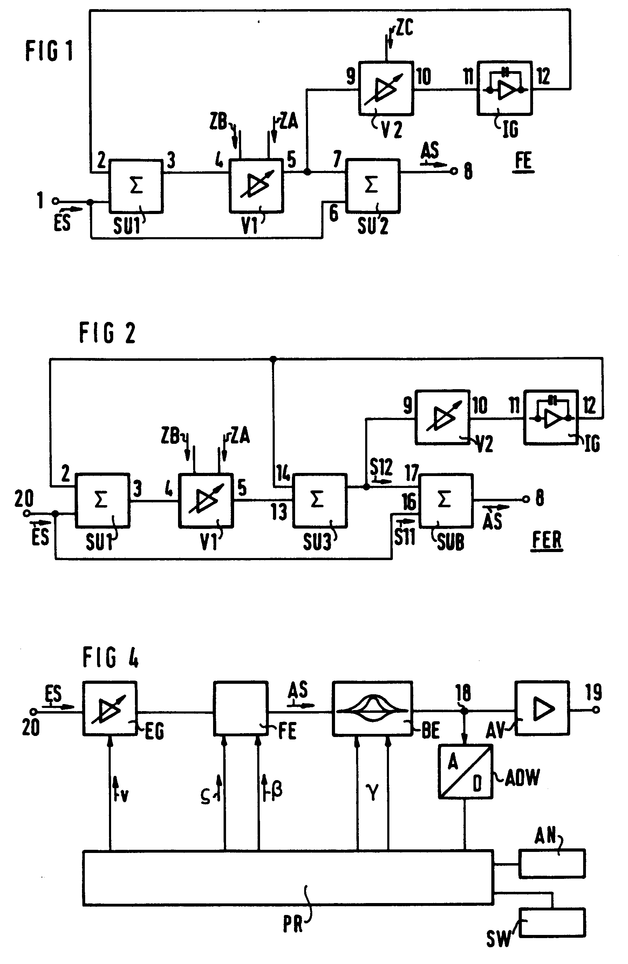

Das in Figur 1 dargestellte Prinzipschaltbild des Fächerentzerrers FE enthält die Reihenschaltung eines ersten Summierers SU1, eines ersten regelbaren Verstärkers V1 und eines zweiten Summierers SU2. Außerdem ist an dem Ausgang 5 des ersten Verstärkers ein zweiter regelbarer Verstärker V2 mit einem nachgeschalteten Integrator IG angeschaltet. Der Signaleingang 1 ist mit einem ersten Eingang des ersten Summierers SU1 und mit einem ersten Eingang 6 des zweiten Summierers SU2 verbunden. Diesen Eingängen wird ein analoges Eingangssignal ES von einer Übertragungsleitung zugeführt. Das entzerrte Ausgangssignal AS wird am Ausgang 8 des zweiten Summierers SU2 abgegeben. Der Ausgang 12 des Integrators IG ist mit dem zweiten Eingang 2 des ersten Summierers SU verbunden.

Durch die Rückkopplung wird eine Übertragungsfunktion erzielt, die der eines Hochpasses entspricht. Durch Einstellparameter ZB und ZA, die die Verstärkungsdämpfung des ersten Verstärkers V1 steuern, wird die Anhebung der höheren Frequenzen gesteuert, während durch den Einstellparameter ZC, der die Verstärkung des zweiten Verstärkers V2 bestimmt, gewissermaßen die "Grenzfrequenz" verschoben wird, d.h. die Verschiebung der Entzerrungskennlinien entlang der Frequenzachse.

In Figur 2 ist eine Variante des Fächerentzerrers FER dargestellt, die einen weiteren Summierer SU3 enthält, der zwischen dem Ausgang 5 des ersten Verstärkers V1 und dem Eingang 17 eines Subtrahierers SUB, dieser entspricht dem Eingang 7 des zweiten Summierers SU2, bzw. dem Eingang 9 des zweiten Verstärkers V2 eingeschaltet ist. Der zweite Eingang 14 des weiteren Summierers SU3 ist ebenfalls an den Ausgang 12 des Integrators IG angeschaltet. Da der erste Summierer SU1, der erste Verstärker V1 und der weitere Summierer SU3 jeweils ihr Eingangssignal invertieren, ist anstelle des zweiten Summierers SU2 der Subtrahierer SUB vorgesehen, der, da ihm ein Eingangssignal invertiert zugeführt wird, wiederum im Endergebnis beide summiert.

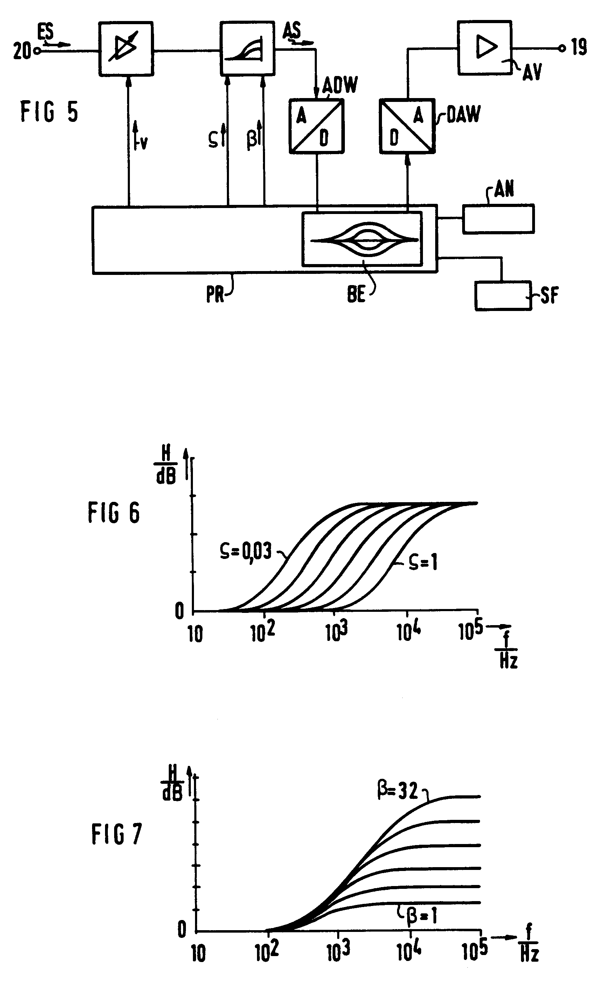

Durch diese Schaltungsanordnung wird erreicht, daß die Entzerrungskennlinien asymptotisch in einem Vereinigungspunkt zusammenlaufen und sich nicht mehr überschneiden, wie dies bei extremen Werten der Einstellparameter bei der Schaltungsanordnung nach Fig. 1 der Fall sein kann. Die günstigeren Entzerrungskennlinien der Variante sind in Figur 7 dargestellt.

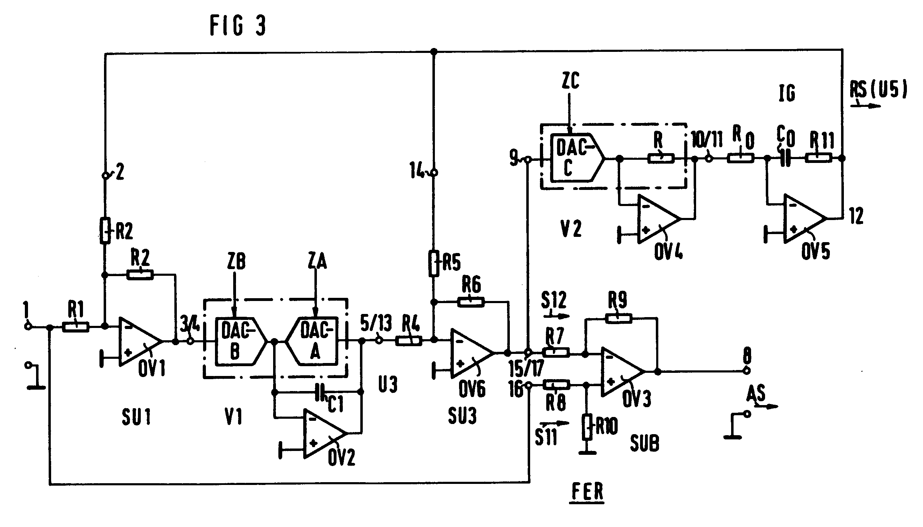

Figur 3 zeigt eine schaltungsmäßige Ausführung des Fächerentzerrers FER gemäß Figur 2. Die Bezugszeichen der Ein- und Ausgänge der Schaltung stimmen mit denen der Ein- und Ausgänge der Prinzipschaltbilder nach Figur 2 überein. Der erste Summierer ist durch einen ersten Operationsverstärker OV1 und zwei Vorwiderstände R1 und R2 sowie einem Rückkopplungswiderstand R3 realisiert.

Der erste steuerbare Verstärker V1, enthält einen zweiten Operationsverstärker OV2 dessen invertierendem Eingang ein multiplizierender D/A-Wandler (Digital/Analog-Wandler) DAC-B vorgeschaltet ist und in dessen Rückkopplungsweg ein zweiter multiplizierender D/A-Wandler DAC-A eingeschaltet ist, so daß die Ausgänge beider D/A-Wandler mit dem invertierenden Eingang des zweiten Operationsverstärkers OV verbunden sind. Die multiplizierenden D/A-Wandler sind als fertige Bausteine beispielsweise bei der Firma "Analog Devices", Norwood, USA unter der Typenbezeichnung AD 7628 erhältlich. Wegen der höheren Einstellgenauigkeit werden in einem Baustein realisierte D/W-Wandler verwendet.

Dem Referenzeingang dieser Bausteine wird jeweils ein analoges Signal zugeführt, während den digitalen Dateneingängen jeweils ein digitaler Einstellparameter zugeführt wird. Mit dieser Schaltung kann der Verstärkungsfaktor in weiten Bereichen gesteuert werden. Die Verstärkung beträgt

$$(1) \qquad \frac{U_a}{U_e} = \frac{ZB}{ZA} = \beta \, ,$$

wobei $U_a$ die Ausgangsspannung und $U_e$ die Eingangsspannung des Verstärkers ist. Der Kondensator C1 wirkt zusammen mit dem D/A-Wandler DAC-A als Tiefpaß, da Frequenzen oberhalb des zu verarbeitenden Frequenzbandes nicht verstärkt werden sollen. Er verringert auch die Schwingneigung der Schaltung.

In dem mit einer üblichen Schaltung realisierten weiteren Summierer SU3 wird das Ausgangssignal des ersten Verstärkers V1 mit einem Rückkoppelsignal RS des Integrators IG zusammengefaßt.

Der Subtrahierer SUB faßt das Ausgangssignal des weiteren Summierers SU3 und das am Eingang 1 anliegende Eingangssignal zusammen. Da durch die Summierer SU1 und SU3 sowie den Verstärker V1 eine Invertierung des Signals stattfindet, ergibt sich eine Addition der Signalkomponenten S11 und S12. Der zweite Verstärker V2 wird durch einen steuerbaren D/A-Wandler DAC und den Operationsverstärker OV4 gebildet. Seine Verstärkung wird über den steuerbaren D/A-Wandler DAC gesteuert. Dessen Ausgangsstrom beträgt

$$(2) \qquad I_a = \frac{U_e}{R} \cdot \frac{ZC}{ZC_{max}} \, .$$

Hieraus folgt

$$(3) \qquad \frac{U_e}{I_a} = R \frac{ZC_{max}}{ZC} = RW \, ,$$

R ist ein interner Referenzwiderstand des D/A-Wandlers. $Z_{max}$ der maximale Wert des Einstellparameters ZC. RW ist der Ersatzwiderstand des zweiten Verstärkers V2. Zusammen mit dem Rückkopplungswiderstand RC des Operationsverstärkers OV4 wird die Verstärkung in Abhängigkeit von Einstellparameter ZC gesteuert.

Der Integrator enthält einen Operationsverstärker OV5, dessen Ausgang 12 über einen Kondensator $C_0$ auf den invertierenden Eingang rückgekoppelt ist und aus einem diesem Eingang vorgeschalteten Ladewiderstand $R_0$.

Der Integrator IG erzeugt das Rückkopplungssignal RS.

Ein Integrator kann in grober Näherung als Tiefpaß aufgefaßt werden. Folglich ergibt sich durch die Gegenkopplung der tiefen Frequenzen über den ersten Summierer SU1 und den weiteren Summierer SU3 eine Anhebung der höheren Frequenzen. Da das so erzeugte Signal, das eine Anhebung der höheren Frequenzen aufweist, über die Reihenschaltung des ersten Summierers SU1, des ersten Verstärkers V1 und des weiteren Summierers SU3 als Signalkomponente S12 zu dem Eingangssignal ES bzw. S11 hinzuaddiert wird, ergeben sich die in Figur 7 dargestellte Übertragungsfunktionen. Das Einfügen eines Widerstandes R11 in Serie zu dem Integrationskondensator $C_0$ erfolgt zur Erhöhung der Stabilität der Schaltung.

Die Übertragungsfunktion der Schaltung wird zunächst vereinfacht dargestellt. Sie beträgt zwischen dem abgetrennten Eingang 13 des weiteren Summierers SU3 und dem Ausgang 12 des Integrators IG

$$(4) \quad \frac{U_5}{U_3} = \frac{R5}{R4} \frac{i\omega C_0 R_0 \frac{RW}{R10}}{1 + i\omega C_0 R_0 \frac{RW}{R10}},$$

wobei RW der Ersatzwiderstand des D/A-Wandlers DAC-C ist und R5 = R6 gewählt ist.

Die Übertragungsfunktion der gesamten Schaltung ergibt sich zu

$$(5) \quad H(i\omega) = \frac{AS}{ES} = 1 + \beta \frac{\dfrac{i\omega}{\rho\omega_0(\beta+1)}}{\dfrac{i\omega}{\rho\omega_0(\beta+1)} + 1}$$

$$\text{mit } \beta = \frac{ZB}{ZA}, \quad \rho = \frac{ZC}{ZC_{max}}, \quad \omega_0 = \frac{1}{R_0 C_0}$$

und bei gleichen Widerständen der Summierer.

Durch eine Veränderung der Verstärkung $\beta$ durch die digitalen Einstellparameter ZB und ZA wird die Verstärkung des Schaltungszweiges mit Hochpaßcharakter verändert und dadurch eine unterschiedliche Anhebung der höheren Frequenzen entsprechend Fig. 7 erreicht.

Eine Veränderung des Einstellparameters ZC bewirkt dagegen eine Verschiebung der Entzerrungskennlinien entlang der Frequenzachse gemäß Figur 6.

Die dargestellten Entzerrungskurven sind besonders für Tonleitungen und Fernsprechleitungen geeignet.

Ein Kondensator C1 im Rückkopplungsweg des ersten Verstärkers sorgt für einen Verstärkungsabfall oberhalb des genutzten Frequenzbandes und verbessert außerdem die Stabilität. Der Verbesserung der Stabilität dient auch der Widerstand R11 im Rückkopplungsweg des Integrators IG.

Die Übertragungsfunktion (6) wird hierdurch entsprechend komplizierter, weist aber im Arbeitsfrequenzbereich praktisch den gleichen Verlauf auf. Durch ungleiche Widerstände der Summierer können Faktoren realisiert werden, mit denen die einzelnen Teilsignale bewertet werden.

(6)

$$H(j\omega)= e * \frac{1+j\omega * \dfrac{\rho * g + \dfrac{1 + (m+c*\rho*\frac{\omega_0}{\omega_1})* \beta}{c + \dfrac{n}{\rho * \omega_0} * \beta}}{} -\omega^2 * \dfrac{(1+\rho*g*c) * \dfrac{\beta}{c+n*\beta}}{\rho*\omega_0*\omega_1}}{1+j\omega * \dfrac{\rho * g + \dfrac{1 + c * \rho * \frac{\omega_0}{\omega_1} * \beta}{c + \dfrac{n}{\rho * \omega_0} * \beta}}{} -\omega^2 * \dfrac{(1+\rho*g*c) * \dfrac{\beta}{c+n*\beta}}{\rho*\omega_0*\omega_1}}$$

$$\text{mit} \quad e = \frac{R10}{R10 + R8} \cdot \left(\frac{R9}{R7}+1\right)$$

$$g = \frac{R11}{R_0}, \qquad c = \frac{R6}{R5}$$

$$m = \frac{\dfrac{R3 \cdot R6 \cdot R9}{R1 \cdot R4 \cdot R7}}{\dfrac{R10}{R8+R10}\left(\dfrac{R9}{R7}+1\right)} \ .$$

$$n = \frac{R3 \cdot R6}{R2 \cdot R4}$$

$$\omega_0 = \frac{1}{R_0 \cdot C_0}, \qquad\qquad \omega_1 = \frac{1}{R\ C1}$$

In Figur 4 ist eine vollständige Entzerrereinrichtung dargestellt. Sie enthält die Reihenschaltung einer Eingangsschaltung EG, deren Eingang 20 das gegebenenfalls zu verstärkende Eingangssignal ES zugeführt wird, des Fächerentzerrers FE, mindestens eines Resonanzentzerrer (auch als Buckelentzerrer oder parametrischer Entzerrer bezeichnet) BE und eines Ausgangsverstärkers AV, der an seinem Ausgang 19 ein entzerrtes Signal mit konstantem Pegel abgibt. Der Ausgang 18 des Resonanzentzerrers ist über einen A/D-Wandler (Analog/Digital-Wandler) ADW auf einen Prozessor PR geführt, der durch den Einstellparametern entsprechende Steuerkriterien "v" die lineare Verstärkung der Eingangsschaltung EG, $\rho$ und $\beta$ die Entzerrungskennlinie des Fächerentzerrers FE sowie durch weitere Steuerkriterien "$\gamma$" den Resonanzentzerrer BE steuert. Zum Einstellen der Entzerrer wird die Frequenz des anliegenden Eingangssignals ES variiert und der Pegel des entzerrten Signals möglichst konstant gehalten. Die Einstellung der Parameter kann automatisch erfolgen oder durch einen Schalter SW ausgelöst werden. In einer Anzeige AN können Abweichungen vom Sollpegel des entzerrten Ausgangssignals angezeigt werden.

Ein Resonanzentzerrer weist Entzerrungskennlinien auf, die der Resonanzkurve eines Schwingkreises ähneln, wobei die Mittenfrequenz die Höhe der Anhebung oder Absenkung und eventuell auch die Eckfrequenzen verstellbar sind, so daß sich Anhebungen oder Absenkungen des Empfangspegels in unterschiedlich großen Frequenzbereichen durchführen lassen.

In Figur 5 ist eine vorteilhafte Variante der Entzerrungseinrichtung dargestellt. Vom Ausgang 8 des Fächerentzerrers wird das Ausgangssignal AS über den A/D-Wandler ADW direkt dem Prozessor PR zugeführt, der den (oder mehrere) Resonanzentzerrer softwaremäßig realisiert. Das entzerrte Signal wird digital oder über einen D/A-Wandler DAW (Digital/Analog Wandler) und den Verstärker AV an dessen Ausgang 19 abgegeben.

**Patentansprüche**

1. Einstellbarer Fächerentzerrer (FE),
   **gekennzeichnet durch**
   die Reihenschaltung eines ersten Summierers (SU1), dem ein Eingangssignal (ES) zugeführt wird, eines ersten regelbaren Verstärkers (V1) und eines zweiten Summierers (SU2), dessen zweitem Eingang (6) ebenfalls das Eingangssignal (ES) zugeführt wird und an dessen Ausgang (8) ein entzerrtes Ausgangssignal (AS) abgegeben wird,
   sowie eine zweite Reihenschaltung (V2, IG) eines zweiten regelbaren Verstärkers (V2) und eines Integrators (IG), die an den Ausgang (5) des ersten regelbaren Verstärkers (V1) angeschaltet ist und deren Ausgang (12) auf einen zweiten Eingang (2) des ersten Summierers (SU1) rückgeführt ist.

2. Einstellbarer Fächerentzerrer (FER) nach Anspruch 1,
   **dadurch gekennzeichnet,**
   daß zwischen dem Ausgang (5) des ersten regelbaren Verstärkers (V1) und dem Eingang des zweiten Summierers (SU2) sowie dem Eingang der zweiten Reihenschaltung (VZ, IG) ein weiterer Summierer (SU3) eingeschaltet ist, dessen zweiter Eingang (14) an den Ausgang (12) der zweiten Reihenschaltung (V2, IG) angeschlossen ist.

3. Einstellbarer Fächerentzerrer (FER) nach Anspruch 2,
   **dadurch gekennzeichnet,**
   daß er die Übertragungsfunktion

$$H(i\omega) = \frac{AS}{ES} \approx 1 + \beta \frac{\dfrac{i\omega}{\rho\omega_0(\beta+1)}}{\dfrac{i\omega}{\rho\omega_0(\beta+1)}+1}$$

   aufweist,
   wobei $\rho$ und $\beta$ Steuerkriterien entsprechen.

4. Einstellbarer Fächerentzerrer nach einem der vorhergehenden Ansprüche,
   **dadurch gekennzeichnet,**
   daß er die Übertragungsfunktion

$$H(j\omega) = e * \frac{1+j\omega * \dfrac{\rho*g+\dfrac{1+(m+c*\rho*\frac{\omega_0}{\omega_1})*\beta}{c+\dfrac{n}{\rho*\omega_0}*\beta}}{\rho*\omega_0} - \omega^2 * \dfrac{(1+\rho*g*c)*\dfrac{\beta}{c+n*\beta}}{\rho*\omega_0*\omega_1}}{1+j\omega * \dfrac{\rho*g+\dfrac{1+c*\rho*\frac{\omega_0}{\omega_1}*\beta}{c+\dfrac{n}{\rho*\omega_0}*\beta}}{\rho*\omega_0} - \omega^2 * \dfrac{(1+\rho*g*c)*\dfrac{\beta}{c+n*\beta}}{\rho*\omega_0*\omega_1}}$$

   aufweist, wobei $\rho$ und $\beta$ Steuerkriterien entsprechen und e, g, c, m, n Dimensionierungsparameter sind.

5. Einstellbarer Fächerentzerrer nach einem der vorhergehenden Ansprüche,
   **dadurch gekennzeichnet,**
   daß anstelle des Integrators (IG) ein PI-Regler (OV5, $R_0$, $C_0$, R11) vorgesehen ist.

6. Einstellbarer Fächerentzerrer nach einem der vorhergehenden Ansprüche,
**dadurch gekennzeichnet,**
daß als erster regelbarer Verstärker (V1) ein Operationsverstärker (OV2) vorgesehen ist, in dessen Rückkopplungsweg ein multiplizierender D/A-Wandler (DAC-A) eingeschaltet ist und dessen Eingang ein zweiter multiplizierender D/A-Wandler (DAC-B) vorgeschaltet ist,
und daß den D/A-Wandlern (DAC-A, DAC-B) digitale Einstellparameter (ZA, ZB) zugeführt werden.

7. Einstellbarer Fächerentzerrer nach einem der vorhergehenden Ansprüche,
**dadurch gekennzeichnet,**
daß als zweiter regelbarer Verstärker (V2) ein gegengekoppelter Operationsverstärker (OV4) vorgesehen ist, dessen Eingang ein weiterer multiplizierender D/A-Umsetzer (DAC-C) vorgeschaltet ist, dem ein weiterer digitaler Einstellparameter (ZC) zugeführt wird.

8. Einstellbarer Fächerentzerrer nach einem der vorhergehenden Ansprüche,
**dadurch gekennzeichnet,**
daß als PI-Regler (OV5, $R_0$, $C_0$, R11) ein rückgekoppelter Operationsverstärker (OV5) vorgesehen ist, in dessen Rückkopplungszweig die Reihenschaltung eines Kondensators ($C_0$) und eines Widerstandes (R11) eingeschaltet ist und dessen Eingang ein Ladewiderstand ($R_0$) vorgeschaltet ist.

9. Einstellbarer Fächerentzerrer nach einem der vorhergehenden Ansprüche,
**dadurch gekennzeichnet,**
daß anstelle des zweiten Summierers (SU2) ein Subtrahierer (SUB) vorgesehen ist, dem ein Eingangssignal (S12) invertiert zugeführt wird.

10. Entzerrereinrichtung mit einem einstellbaren Fächerentzerrer (FE, FER) nach einem der vorhergehenden Ansprüche,
**dadurch gekennzeichnet,**
daß er mit mindestens einem Resonanzentzerrer (BE) in Reihe geschaltet ist.

11. Entzerrereinrichtung nach Anspruch 8,
**dadurch gekennzeichnet,**
daß er über einen A/D-Wandler (ADW) mit einem digital realisierten Resonanzentzerrer (BE) verbunden ist.

12. Entzerrereinrichtung nach Anspruch 8,
**dadurch gekennzeichnet,**
daß er über einen A/D-Wandler (AD) mit einem die Entzerrungskennlinien steuernden Prozessor (PR) verbunden ist und daß in dem Prozessor (PR) mindestens ein Resonanzentzerrer (BE) realisiert ist.

FIG 1

FIG 2

FIG 4

FIG 3

EP 0 618 685 A2

FIG 5

FIG 6

FIG 7